# EUROPEAN PATENT SPECIFICATION

(11) **EP 2 987 684 B1**
(45) Date of publication and mention of the grant of the patent: **10.01.2018**
(21) Application number: 15181774.9
(22) Date of filing: 20.08.2015
(51) Int. Cl.: B60R 21/207

(54) **VEHICLE SEAT DEVICE**
FAHRZEUGSITZVORRICHTUNG
DISPOSITIF DE SIEGE DE VEHICULE

(30) Priority: 22.08.2014 JP 2014169585
(43) Date of publication of application: 24.02.2016
(73) Proprietor: Tachi-S Co., Ltd., Akishima-shi, Tokyo 196-8611 (JP)
(72) Inventor: Tobata, Hideo, Tokyo 196-8611 (JP); Koike, Atsushi, Tokyo 196-8611 (JP); Amano, Tomohiro, Tokyo 196-8611 (JP)
(74) Representative: Epping - Hermann - Fischer

(56) References cited:
- EP-A1- 0 733 518
- JP-A- 2010 208 609

## Description

### BACKGROUND

### 1. Field of the Invention

The present invention relates to a vehicle seat device.

### 2. Description of the Related Art

In a vehicle such as an automobile, as restraint fittings to confine the body of an occupant to a seat, three point seatbelts that have three fixings, at both the left and right sides of the waist of the occupant, and at either the left or right side of the shoulders of the occupant, are widely employed. Four point, and five point seatbelts are also known in which the number of fixing points is increased to raise the restraining force.

The vehicle seat described in the following JP-A-2007-15541 includes two belts disposed along the up-down direction at both side portions of a seatback, and a belt installing mechanism at an upper edge of the seatback for swinging each belt toward the front. When a vehicle collision is detected or predicted, each of the belts is swung in front of the occupant by the belt installing mechanism, and installed with substantially left-right symmetry around the occupant from the shoulders to the waist.

In a three point seatbelt, the upper body of an occupant is restrained by a belt that diagonally crosses the chest from either the left or right shoulder to the waist. However, a left-right unbalance arises in restraint of the upper body, with a concern that the upper body might come out from the belt. Fastening is troublesome for four point or five point seatbelts in which the number of fixing points is increased, and the restraining force raised.

In the vehicle seatbelt described in JP-A-2007-15541, two belts are automatically installed from the shoulders to the waist of the occupant, with substantially left-right symmetry. However the width of belts is generally of the order of a few centimeters, limiting the contact surface area with the occupant. Moreover, due to there being a wide spacing between the two belts in the direction from the upper edge to the lower edge of the seat back, there is a concern that, depending on the physique of the occupant, such as for example a low sitting height, or narrow shoulder width, the restraint of the upper body of the occupant might be insufficient.

EP 0733518 A1 discloses a vehicle arm rest which is pivotably attached to the back of a vehicle seat and accommodates an air bag module comprising a folded air bag and an inflator in a reaction canister. A skin encapsulating the air bag module has tear lines to facilitate deployment of the air bag into a space between the arm rest and either an occupant in the seat or the adjacent side of the vehicle. The arm rest may be drivable by an electric motor between raised and lowered positions automatically in response to door switch and vehicle ignition signals.

### SUMMARY

In consideration of the above circumstances, an object of the invention is to provide a vehicle seat device capable of restraining the upper body of an occupant with good left-right balance, and capable of raising the restraining force.

According to an aspect of the invention, there is provided a vehicle seat device including: a seat body including a seat cushion and a seatback; at least a pair of airbag modules provided as a left-right pair at left and right side portions of the seat body; and at least two moveable sections each side portions of the seat body; supporting one of the airbag modules and wherein each movable section is movable with respect to the seat body, wherein the airbag modules are moved, by movement of the moveables section, between first positions along side portions of the seat body, and second positions in front of a front face of the seatback, and airbags deployed from the airbag modules in the second positions sandwich an occupant seated in the seat
body between the airbags and the seatback.

The invention enables provision of a vehicle seat device capable of restraining the upper body of an occupant with good left-right balance, and capable of raising the restraining force.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is a diagram illustrating a configuration of an example of a vehicle seat device to explain an embodiment of the invention;
Fig. 2 is a diagram illustrating a cross-section taken along line II-II in Fig. 1;
Fig. 3 is a diagram illustrating functional blocks of an example of an on-board airbag actuation system, and a deployed state of airbags of the vehicle seat device of Fig. 1;
Fig. 4 is a diagram illustrating functional blocks of the vehicle seat device of Fig. 1;
Fig. 5 is a diagram illustrating configuration of a modified example of the vehicle seat device of Fig. 1;
Fig. 6 is diagram illustrating configuration of another modified example of the vehicle seat device of Fig. 1;
Fig. 7 is a diagram to explain an example of a method to detect the physique of an occupant;
Fig. 8 is a diagram to explain another example of a method to detect the physique of an occupant;
Fig. 9 is a diagram illustrating functional blocks of another example of a vehicle seat device to explain the invention;
Fig. 10 is a diagram illustrating an actuation flow of the vehicle seat device of Fig. 9;
Fig. 11 is diagram illustrating a modified example of an actuation flow of the vehicle seat device of Fig. 9;
Fig. 12 is a diagram illustrating functional blocks of another example of a vehicle seat device to explain the invention;
Fig. 13 is a diagram illustrating an actuation flow of the vehicle seat device of Fig. 12;
Fig. 14 is a diagram illustrating an actuation flow of a modified example of the vehicle seat device of Fig. 12;
Fig. 15 is a diagram illustrating a configuration of another example of a vehicle seat device to explain the invention;
Fig. 16 is a diagram illustrating a configuration of another example of a vehicle seat device to explain the invention;
Fig. 17 is a diagram illustrating a configuration of another example of a vehicle seat device to explain the invention; and
Fig. 18 is a diagram illustrating a configuration of another example of a vehicle seat device to explain the invention.

### DETAILED DESCRIPTION OF THE INVENTION

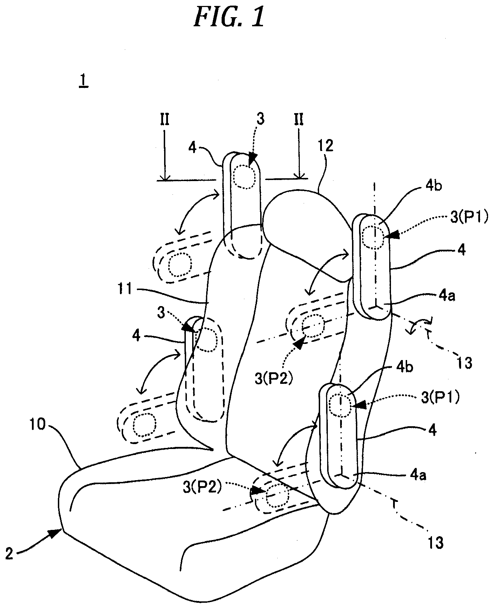

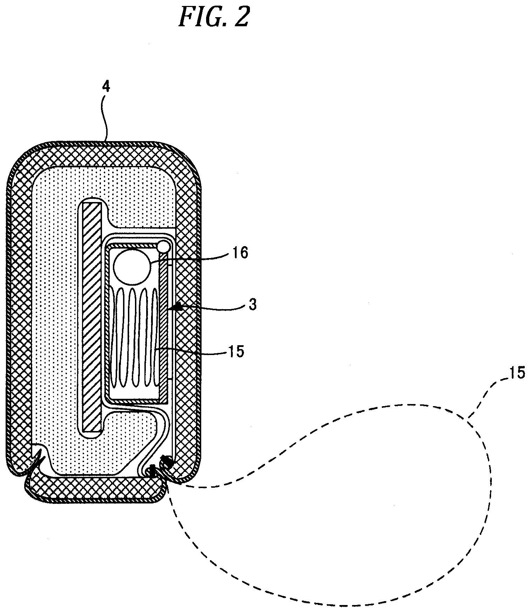

Fig. 1 and Fig. 2 illustrate a configuration of an example of a vehicle seat device to explain the invention.

The vehicle seat device 1 illustrated in Fig. 1 includes a seat body 2, airbag modules 3, and movable sections 4 that support the airbag modules 3.

The seat body 2 includes a seat cushion 10 configuring a seating face section, and a seatback 11 configuring a backrest section. In the example illustrated, a headrest 12 that supports the head and neck of an occupant seated in the seat body 2 is provided at an upper portion of the seatback 11.

The airbag modules 3 are provided as a left-right pair to left and right side portions of the seat body 2. In the example illustrated, a pair of the airbag modules 3 is provided to left and right side portions at the upper side (the headrest 12 side) of the seatback 11, and a pair is provided to left and right side portions at the lower side (the seat cushion 10 side) of the seatback 11.

In the example illustrated, the movable section 4 is provided to each of the airbag modules 3. Similarly to the airbag modules 3, a pair of the movable sections 4 is provided to the left and right side portions at the upper side of the seatback 11, and a pair of the movable sections 4 is provided to the left and right side portions at the lower side of the seatback 11.

The movable sections 4 exhibit arm shapes, and are supported by a non-illustrated frame of the seatback 11, so that base end portions 4a of the movable section 4 are rotatable about rotation shafts 13 that extend along the left-right direction of the seatback 11. The airbag modules 3 are installed inside leading end portions 4b of the movable sections 4, and, by rotating the movable sections 4, are moved between first positions P1 disposed along a side portion of the seat body 2, and second positions P2 in front of the front face of the seatback 11.

The airbag module 3 is configured including an airbag 15 and an inflator 16 that generates gas to deploy the airbag 15. The inflator 16 is, for example, ignited by an on-board airbag actuation system.

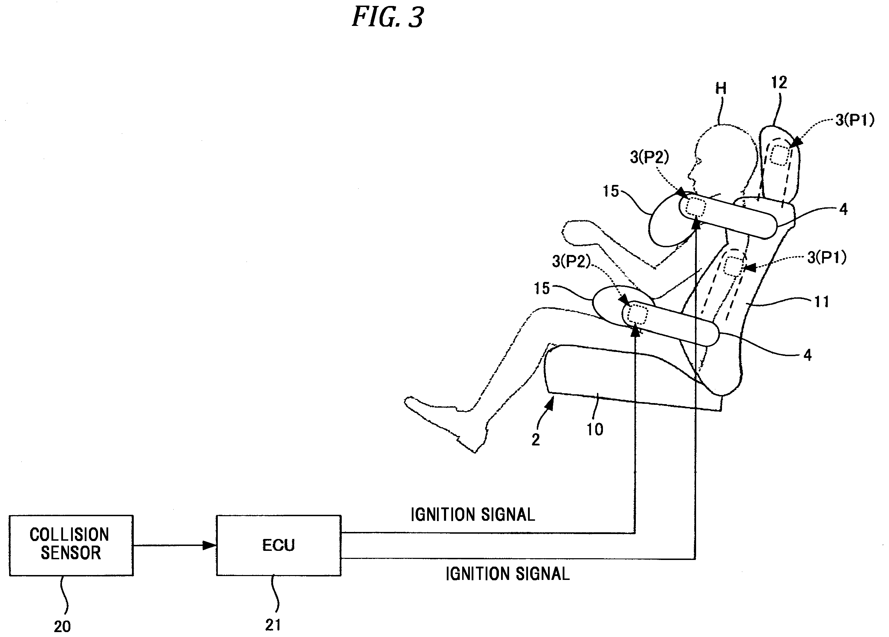

Fig. 3 illustrates a configuration of an example of an airbag actuation system.

The airbag actuation system includes a collision sensor 20 that is provided at appropriate locations on the vehicle, such as on a front portion and on a side portion, and detects shock imparted to the vehicle, and an electronic control unit (ECU) 21 that detects a vehicle collision based on the shock detected by the collision sensor 20.

On vehicle collision detection, the ECU 21 sends an ignition signal to the airbag modules 3 to ignite the inflators 16 (see Fig. 2) of the airbag modules 3. The inflator 16 in each of the airbag modules 3 is ignited according to the ignition signal, and the airbag 15 is thereby deployed.

The airbag modules 3 are configured such that the inflators 16 are ignited and the airbags 15 deployed only when the airbag modules 3 are at the second positions P2 in front of the front face of the seatback 11. For example, movement of each of the movable sections 4 supporting the airbag modules 3 may be detected by an appropriate sensor, and the ECU 21 may be controlled to send the ignition signal to each of the airbag modules 3 according to the detected position of the movable sections 4.

In some cases the collision sensors are integrally provided to the airbag modules 3. In such cases the inflators 16 are directly ignited by output signals of the sensors inside the airbag modules 3, without going through the ECU 21 of the vehicle.

The airbag 15 of the airbag module 3 disposed at the second position P2 deploys to the front face side of the occupant. The deployed airbag 15 restrains the upper body of an occupant H seated in the seat body 2, between the airbag 15 and the seatback 11.

In the example illustrated, the two shoulders of the occupant H are restrained by the airbags 15 of the pair of airbag modules 3 provided at the upper side of the seatback 11. The waist of the occupant H is also restrained by the pair of airbag modules 3 provided at the lower side of the seatback 11.

The airbag modules 3 are able to restrain the upper body of the occupant H with good left-right balance due to being provided as a left-right pair at the left and right side portions of the seat body 2. The airbags 15 enable the contact surface area with the occupant H to be increased compared to that of an ordinary seatbelt, and moreover, differences in physique between occupants H can be accommodated due to deployment by gas. This thereby enables the restraining force on the occupant H to be raised.

The airbag modules 3 are preferably provided as left-right pairs so as to form plural pairs at the left and right side portions of the seat body 2. Providing plural pairs of the airbag modules 3 enables the restraining force on the occupant H to be raised even more, due to restraining plural sites on the occupant H.

There are no particular limitations to the restrained sites of the occupant H, and, for example, the waist and the two shoulders are suitable. Restraining the waist enables the whole body to be effectively prevented from lifting up, and restraining the two shoulders enables the upper body to be effectively prevented from tilting forward.

The movable sections 4 are movable with respect to the seat body 2, and the airbag modules 3 and the movable sections 4 are capable of retracting to the side portions of the seat body 2 when not in use, and accordingly do not impede boarding and alighting, enabling ease-of-use to be raised.

The vehicle seat device 1 in this example is also usable in combination with a seatbelt, or another airbag module, such as a front airbag module.

The movable sections 4 may also be configured so as to be manually operated by the occupant H, however in the vehicle seat device 1 of the present example, the movable sections 4 are configured so as to be electrically operated.

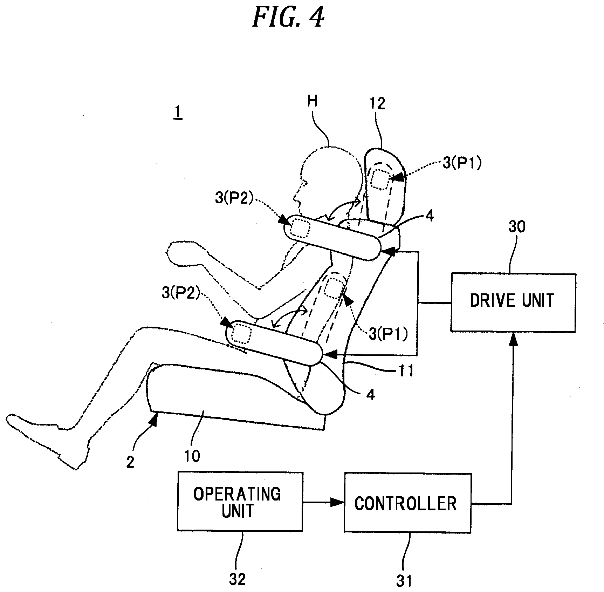

Fig. 4 illustrates functional blocks of the vehicle seat device 1.

The vehicle seat device 1 includes a drive unit 30, and a controller 31 that controls the drive unit 30. The drive unit 30 is configured including an actuator, and rotates the movable sections 4 under control from the controller 31.

An operation signal instructing rotation of the movable sections 4 is input from an operating unit 32 to the controller 31. The operating unit 32 is configured including a switch or the like operated by the occupant H, and is, for example, provided to a side portion of the seat body 2 or to a door panel of the vehicle.

The controller 31 controls the drive unit 30 according to the operation signal, and, under control of the controller 31, the drive unit 30 rotates the movable sections 4 so that each of the airbag modules 3 is disposed at the first positions P1 or the second positions P2.

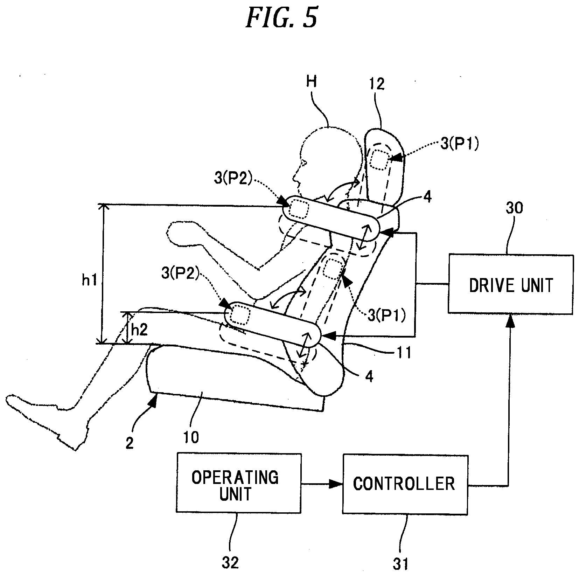

Fig. 5 illustrates functional blocks of a modified example of the vehicle seat device 1.

In the seat device illustrated in Fig. 5, the movable sections 4 are, in addition to being capable of rotation about the rotation shafts 13, also capable of translation in the up-down direction along side portions of the seatback 11. Distances h1, h2 of the second positions P2 of the airbag modules 3 from the seat cushion 10 are accordingly adjustable by translation of the movable sections 4.

The drive unit 30 rotates and translates the movable sections 4 under control from the controller 31.

An operation signal instructing translation of the movable sections 4 in the up-down direction along the side portions of the seatback 11 is input from the operating unit 32 to the controller 31. The controller 31 controls the drive unit 30 according to the operation signal, and the drive unit 30 translates the movable sections 4 so as to adjust the heights h1, h2 of the second positions P2 of the airbag modules 3 from the seat cushion 10.

Due to being able to adjust the second positions P2 of the airbag modules 3 at which the airbags 15 are deployed, the second positions P2 of the airbag modules 3 can be aligned with positions at specific restrained sites of the occupant H (in the present example the two shoulders and waist of the occupant H) in a seated state in the seat body 2. This thereby enables the airbags 15 to be placed in appropriate contact with the specific restrained sites of the occupant H irrespective of the physique of the occupant H, enabling the restraining force of the occupant H to be raised even more.

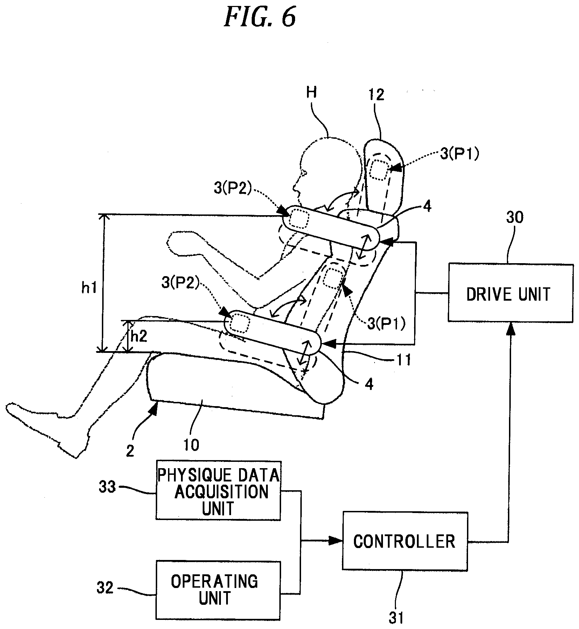

Fig. 6 illustrates a configuration of another modified example of the vehicle seat device 1.

In the example illustrated in Fig. 6, configuration may be made such that the second positions P2 of the airbag modules 3 are automatically adjusted according to the physique of the occupant H seated in the seat body 2.

Physique data according to the physique of the occupant H seated in the seat body 2 is input from a physique data acquisition unit 33 to the controller 31. The controller 31 finds the positions of specific restrained sites on the occupant H according to the physique data (for example the two shoulders and waist), and sets the second positions P2 of the airbag modules 3, namely the heights h1, h2 of the second positions P2 from the seat cushion 10, so as to align with the detected position of the restrained sites.

The controller 31 controls the drive unit 30 according to the operation signal input from the operating unit 32. Under control of the controller 31, the drive unit 30 rotates and translates the movable sections 4 so that each of the airbag modules 3 is disposed at the first position P1 or the second position P2.

### [Physique Detection]

Explanation follows regarding a method to detect the positions of specific restrained sites on the occupant H seated in the seat body 2.

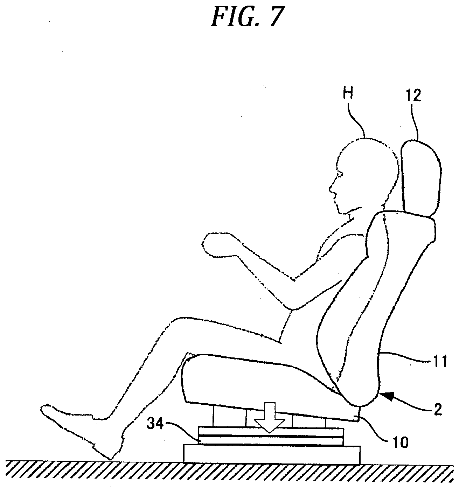

The example illustrated in Fig. 7 is of a case in which the positions of the specific restrained sites are detected according to the weight of load on the seat body 2.

In the present example, the physique data acquisition unit 33 is configured by a load sensor 34. The load sensor 34 is provided between the seat body 2 and the vehicle, and outputs a signal according to the weight of load on the seat body 2 as the physique data.

The controller 31 detects the weight of load on the seat body 2, namely the weight of the occupant H, based on an output signal of the load sensor 34. The physique of the occupant H is related to the weight of the occupant H, and the controller 31 is pre-stored with data regarding the interrelation between the positions of the specific restrained sites as the physique, and weight. The controller 31 references this data, and finds the position of the restrained sites corresponding to the detected weight.

Note that in the above example, the positions of the specific restrained sites are detected indirectly from the weight, however load sensors may be provided distributed in the covering layer section of the front face of the seatback 11, and the positions of the specific restrained sites directly detected from the distribution of weight of load imparted to the seatback 11.

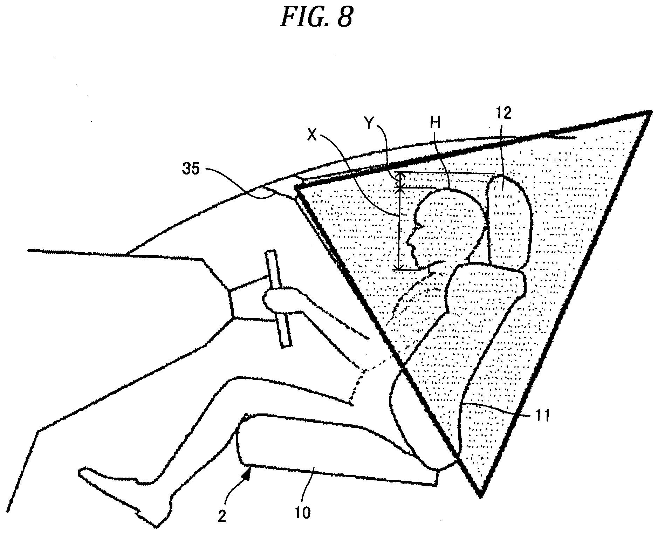

The example illustrated in Fig. 8 is of a case in which the position of a specific restrained site is detected based on video images obtained by imaging the vehicle interior.

In the present example, the physique data acquisition unit 33 is configured by an imaging device 35. The imaging device 35 is provided at a suitable location in the vehicle, and acquires images of the vehicle interior in a range including the seat body 2.

The controller 31 performs image analysis, such as outline detection, on the images acquired by the imaging device 35, and finds the positional relationship Y between a specific site on the occupant H (for example the head), and a specific location on the seat body 2 or vehicle interior (for example the upper edge of the headrest 12). The physique of the occupant H and the positional relationship Y are associated with each other, and the controller 31 is pre-stored with the acquired data representing the interrelation between the position of the specific restrained site, as the physique, and the positional relationship Y. The controller 31 references this data, and finds the position of the specific restrained site corresponding to the detected positional relationship Y.

There is also a relationship between the physique of the occupant H and a size X of a specific site (for example the head), and acquired data representing an interrelationship between the position of the specific restrained site and the size X of the specific site may be used to find the position of the specific restrained site from the size X of the specific site obtained by image analysis.

In cases in which the positional relationship between the head of the occupant H and the specific location on the seat body 2 or in the vehicle interior is detected, instead of the imaging device 35, a person sensor utilizing infrared, ultrasound, light or the like may be installed at a specific location within the vehicle interior, so as to detect the positional relationship between the head of the occupant H and the specific location on the seat body 2 or in the vehicle interior, based on the installation location of the sensor.

Thus by detecting the positions of the specific restrained site on the occupant H seated in the seat body 2, the ease-of-use can be improved by automatically adjusting the second positions P2 of the airbag modules 3 according to the detected position of the specific restrained site.

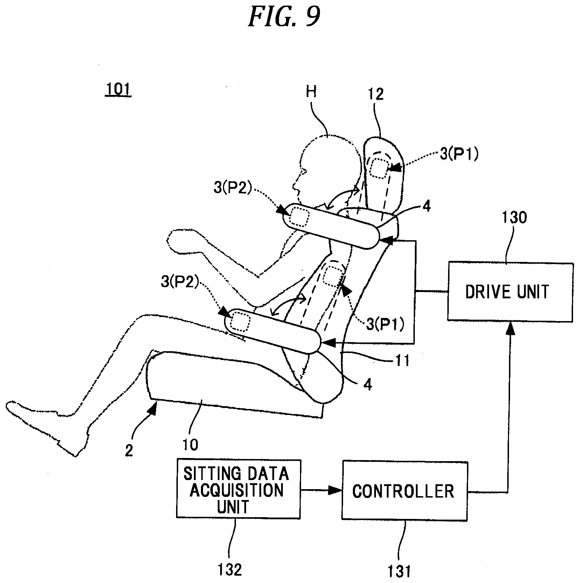

Fig. 9 illustrates functional blocks of another example of a vehicle seat device to explain the invention. Common elements to those of the vehicle seat device 1 are allocated the same reference numerals, and explanation thereof is omitted or abbreviated.

In a vehicle seat device 101 illustrated in Fig. 9, configuration is made such that movable sections 4 are automatically rotated as an occupant H sits on a seat body 2, and such that airbag modules 3 automatically move to second positions P2 where airbags 15 are deployable.

The vehicle seat device 101 includes a drive unit 130, and a controller 131 that controls the drive unit 130. The drive unit 130 is configured including an actuator, and rotates the movable sections 4 under control from the controller 131.

Sitting data according to the seated state of the occupant H in the seat body 2 is input from a sitting data acquisition unit 132 to the controller 131. The controller 131 detects the occupant H sitting in the seat body 2 according to the sitting data, and when detection is made that the occupant H is sitting in the seat body 2, the controller 131 controls the drive unit 130 so as to rotate the movable sections 4 such that the airbag modules 3 are disposed in the second positions P2.

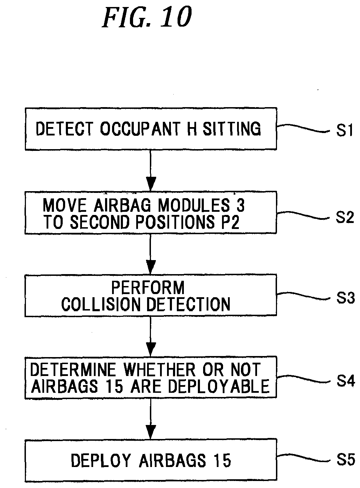

Fig. 10 illustrates an actuation flow in the vehicle seat device 101 configured as described above, from when the occupant H sits in the seat body 2 up to deployment of the airbags 15 of the airbag modules 3.

First, the controller 131 detects the occupant H sitting in the seat body 2 according to sitting data input from the sitting data acquisition unit 132 (step S1). On detecting sitting, the controller 131 controls the drive unit 130, and under control of the controller 131, the drive unit 130 moves the movable sections 4 such that the airbag modules 3 are disposed in the second positions P2 (step S2).

On vehicle collision detection by the ECU 21 (see Fig. 3) of the airbag actuation system (step S3), determination is made by the ECU 21 as to whether or not deployment of the airbags 15 is possible (step S4). Affirmative determination is made in the present example, since the airbag modules 3 have been disposed in the second positions P2 in which the airbags 15 are deployable at step S2, and the airbags 15 are deployed (step S5).

### [Sitting Detection]

Explanation follows regarding a method of detecting the occupant H sitting in the seat body 2.

The weight of the occupant H bears on the seat body 2, and the weight of the load on the seat body 2 changes with the occupant H sitting down and getting up. This thereby enables the occupant H to be detected sitting in the seat body 2 according to the weight of the load on the seat body 2. For example, as illustrated in Fig. 7, the sitting data acquisition unit 132 may be configured by a load sensor 34, thereby enabling the controller 131 to detect sitting by detecting the weight of load on the seat body 2 according to an output signal from the load sensor 34.

Moreover, the occupant H in the seat body 2 may be detected sitting according to video images obtained by imaging the vehicle interior. For example, as illustrated in Fig. 8, the sitting data acquisition unit 132 may be configured by an imaging device 35, thereby enabling the controller 131 to recognize the occupant H and detect sitting by performing image analysis, such as outline detection, on the video acquired by the imaging device 35.

The method of detecting sitting is not limited to the above examples. For example, sitting may be detected by employing a person sensor that utilizes infrared, ultrasound, light or the like. In cases in which the vehicle seat device 101 is employed in combination with a seatbelt, sitting may be detected according to the fastened state of the seatbelt.

By thus detecting the occupant H sitting in the seat body 2, and automatically rotating the movable sections 4, the airbag modules 3 are moved from the first positions P1 to the second positions P2, so that the airbag modules 3 do not impede boarding and alighting the vehicle. After seating, the airbag modules 3 are reliably disposed in the second positions P2 where the airbags 15 are deployable, enabling the ease-of-use to be raised.

The vehicle seat device 101 may also, similarly to in the vehicle seat device illustrated in Fig. 5, be configured such that the second positions P2 of the airbag modules 3 are adjustable. Moreover, similarly to the vehicle seat device illustrated in Fig. 6, configuration may be made such that the second positions P2 of the airbag modules 3 are automatically adjusted according to the physique of the occupant H seated in the seat body 2.

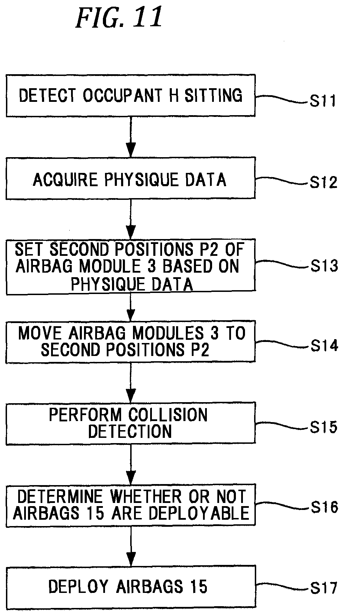

Fig. 11 illustrates an actuation flow from the occupant H sitting in the seat body 2 up to deployment of the airbags 15 of the airbag modules 3, in a case of the vehicle seat device 101 in which the second positions P2 of the airbag modules 3 are automatically adjustable according to the physique of the occupant H.

First the controller 131 detects the occupant H sitting in the seat body 2 (step S11).

On detecting the occupant H sitting in the seat body 2, the controller 131 then acquires physique data of the occupant H who has sat in the seat body 2 (step S12).

The controller 131 then finds positions of specific retrained locations on the occupant H based on the physique data, and sets the second positions P2 of the airbag modules 3 so as to align with the positions of the found restrained locations (step S13).

The controller 131 then controls the drive unit 130, and, under control of the controller 131, the drive unit 130 rotates and translates the movable sections 4 such that the airbag modules 3 are moved to the set second positions P2 (step S14).

On detecting a vehicle collision with the ECU 21 (see Fig. 3) of the airbag actuation system (step S 15), the ECU 21 determines whether or not the airbags 15 are deployable (step S16). Affirmative determination is made in the present example, since the airbag modules 3 have been disposed in the second positions P2 in which the airbags 15 are deployable at step S14, and the airbags 15 are deployed (step S17).

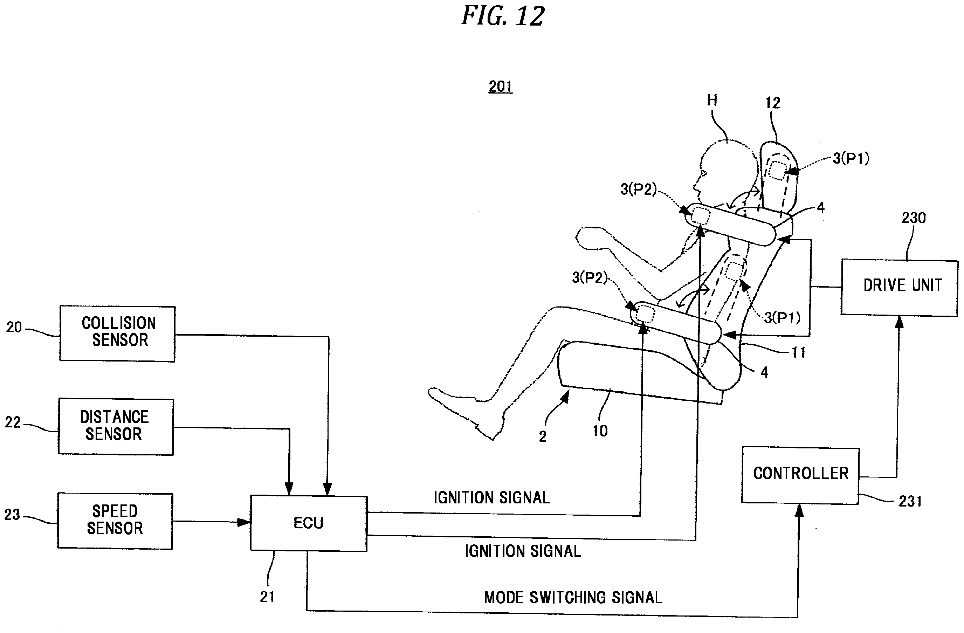

Fig. 12 illustrates functional blocks of another example of a vehicle seat device for explaining the invention. Common elements to those of the vehicle seat device 1 are allocated the same reference numerals, and explanation is omitted or abbreviated.

In a vehicle seat device 201 illustrated in Fig. 12, configuration is made such that movable sections 4 are automatically rotated on vehicle collision prediction by an on-board collision prediction system, thereby automatically disposing airbag modules 3 in second positions P2 where airbags 15 are deployable.

The collision prediction system is configured including a distance sensor 22 that measures distance to other vehicles, obstacles, or the like, and a speed sensor 23 that detects vehicle speed, integrated into the above-described airbag actuation system (see Fig. 3).

Based on the distance measured by the distance sensor 22 and the speed detected by the speed sensor 23, the ECU 21 predicts a vehicle collision by detecting, for example, the vehicle approaching too close to another vehicle, an obstacle, or the like, and rapid deceleration of the vehicle due to brake operation, or detects that a collision has been avoided.

The ECU 21 outputs a mode switching signal that instructs transition to a collision readiness mode when a collision has been predicted, or instructs lifting of the collision readiness mode when detected that a collision has been avoided.

The vehicle seat device 201 includes a drive unit 230, and a controller 231 that controls the drive unit 230. The drive unit 230 is configured including an actuator, and, under control from the controller 231, rotates movable sections 4.

The mode switching signal is input from the ECU 21 to the controller 231. The controller 231 controls the drive unit 230 to rotate the movable sections 4 such that the airbag modules 3 are disposed in the second positions P2 in response to a mode switching signal instructing transition to collision readiness mode, and such that the airbag modules 3 are disposed in the first positions P1 in response to a mode switching signal instructing lifting of the collision readiness mode.

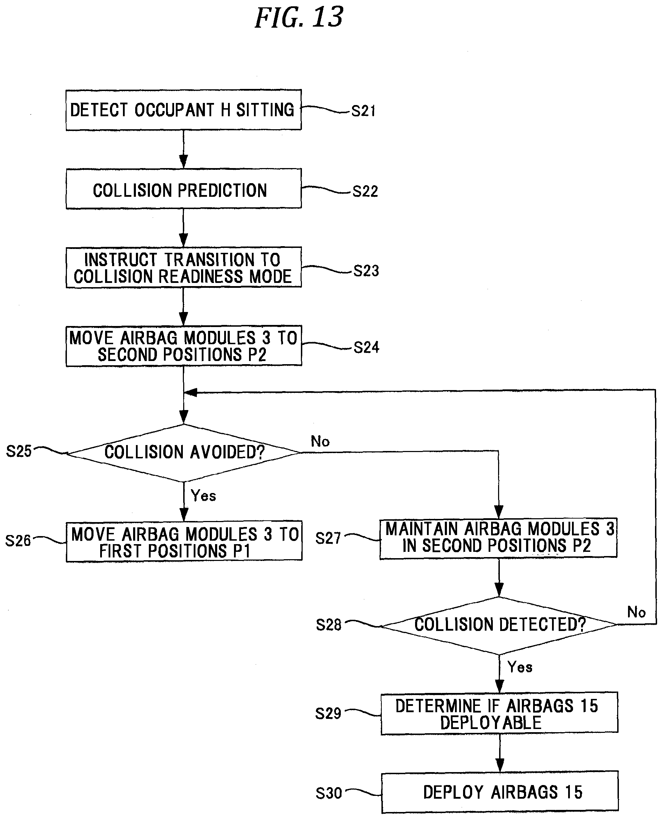

Fig. 13 illustrates an actuation flow in the vehicle seat device 201 configured as described above, from the occupant H sitting in the seat body 2 to deployment of the airbags 15 of the airbag modules 3.

First, the controller 231 detects the occupant H sitting in the seat body 2 (step S21). Detection of sitting by the controller 231 may be performed similarly to detection of sitting by the controller 131 of the vehicle seat device 101 illustrated in Fig. 11, and is performed to prevent unnecessary actions such as movement of the movable section 4 when the occupant H is not seated, deployment of the airbags 15, or the like.

Then on collision prediction by the ECU 21 of the collision prediction system (step S22), a mode switching signal is output from the ECU 21 instructing transition to the collision readiness mode (step S23).

On input of the mode switching signal instructing transition to the collision readiness mode, the controller 231 controls the drive unit 230, and, under control of the controller 231, the drive unit 230 moves the movable sections 4 such that the airbag modules 3 are disposed in the second positions P2 (step S24).

Then determination is made by the ECU 21 as to whether or not a collision has been avoided (step S25).

On detection by the ECU 21 that a collision has been avoided, a mode switching signal is output from the ECU 21 to instruct lifting of the collision readiness mode. On input of the mode switching signal instructing lifting of the collision readiness mode, the controller 231 controls the drive unit 230, and, under control of the controller 231, the drive unit 230 moves the movable sections 4 such that the airbag modules 3 are disposed in the first positions P1 (step S26).

However, in cases in which a collision is not detected as being avoided by the ECU 21, the airbag modules 3 are retained in the second positions P2 (step S27), and then collision determination is made by the ECU 21 of the above-described collision detection system (step S28).

On vehicle collision detection by the ECU 21, determination is made by the ECU 21 as to whether or not the airbags 15 are deployable (step S29). Affirmative determination is made in the present example, since the airbag modules 3 have been disposed in the second positions P2 in which the airbags 15 are deployable at steps S24, S27, and the airbags 15 are deployed (step S30).

Thus by predicting a vehicle collision, automatically rotating the movable sections 4, and thereby moving the airbag modules airbag modules 3 from the first positions P1 to the second positions P2, it is possible to protect the occupant without the occupant being made aware.

Similarly to in the vehicle seat device illustrated in Fig. 5, the vehicle seat device 201 may also be configured such that the second positions P2 of the airbag modules 3 are adjustable. Moreover, similarly to the vehicle seat device illustrated in Fig. 6, configuration may be made such that the second positions P2 of the airbag modules 3 are automatically adjusted according to the physique of the occupant H seated in the seat body 2.

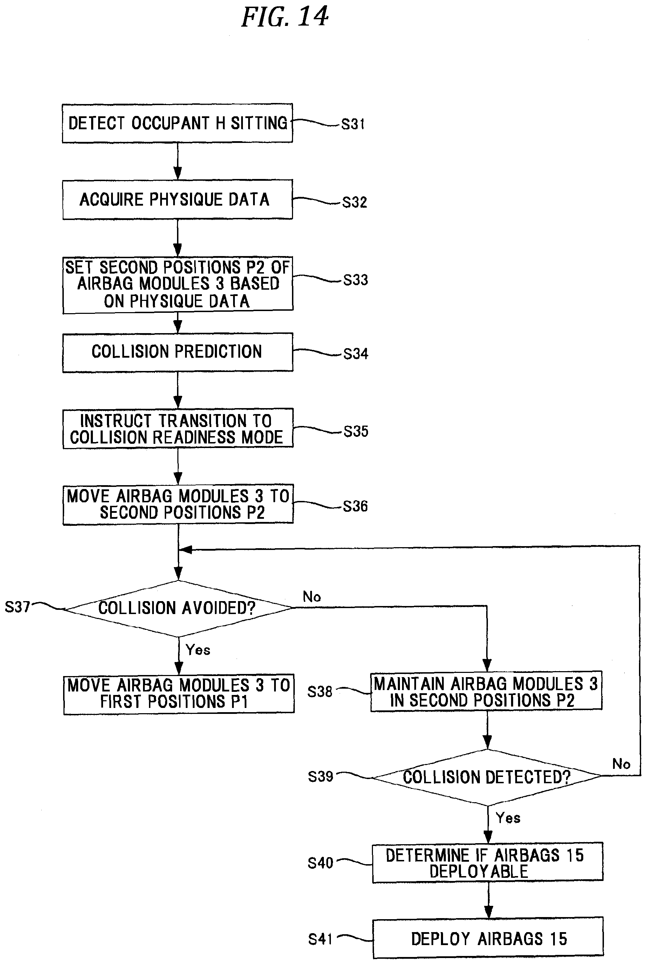

Fig. 14 illustrates an actuation flow, from the occupant H sitting in the seat body 2 to deployment of the airbags 15 of the airbag modules 3, for the vehicle seat device 201 configured such that the second positions P2 of the airbag modules 3 are automatically adjusted according to the physique of the occupant H.

First, the controller 231 detects the occupant H sitting in the seat body 2 (step S31).

On detection of the occupant H sitting in the seat body 2, the controller 231 acquires physique data of the occupant H who is seated in the seat body 2 (step S32).

The controller 231 that acquired the physique data of the occupant H then finds the positions of specific restrained sites on the occupant H based on the physique data, and sets the second positions P2 of the airbag modules 3 so as to align with the detected positions of the restrained locations (step S33).

Then, on collision prediction by the ECU 21 of the collision prediction system (step S34), the mode switching signal is output from the ECU 21 instructing transition to the collision readiness mode (step S35).

On input with the mode switching signal instructing transition to the collision readiness mode, the controller 231 controls the drive unit 230, and, under control of the controller 231, the drive unit 230 moves the movable sections 4 such that the airbag modules 3 are disposed in the set second positions P2 (step S36).

Then collision avoidance is determination by the ECU 21 (step S37), and when collision avoidance is not detected, the airbag modules 3 are maintained in the second positions P2 (step S38), and then collision determination is performed by the ECU 21 (step S39).

On vehicle collision detection by the ECU 21, determination is made by the ECU 21 as to whether or not the airbags 15 are deployable (step S40). Affirmative determination is made in the present example, since the airbag modules 3 have been disposed in the second positions P2 in which the airbags 15 are deployable at steps S36, S38, and the airbags 15 are deployed (step S41).

The configurations of the various vehicle seat devices described above are merely examples, and appropriate variations and modifications may be implemented within a range not departing from the spirit of the invention.

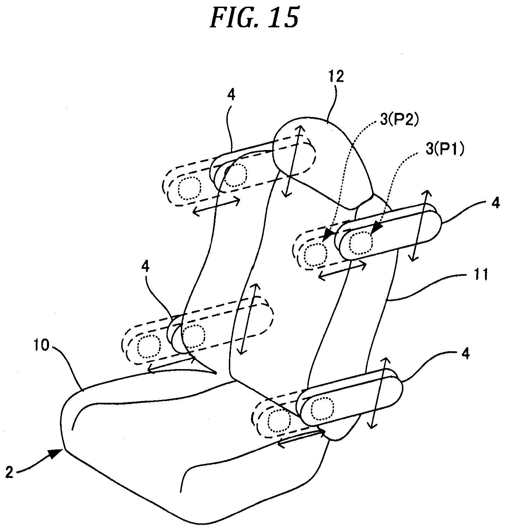

For example, in the example illustrated in Fig. 1, configuration is made such that the airbag modules 3 are moved by rotation of the movable sections 4 about the rotation shafts 13, between the first positions P1 along the side portions of the seat body 2 and the second positions P2 in front of the front face of the seatback 11. However, in the example illustrated in Fig. 15, the movable sections 4 are configured translatable in the front-rear direction of the seatback 11, and the airbag modules 3 are moved between first positions P1 and second positions P2 by translation of the movable sections 4 in the front-rear direction. Configuration is made such that the position of the second positions P2, namely the distance from the seat cushion 10 and the distance from the seatback 11, is adjustable by translation of the movable sections 4 in the up-down direction and the front-rear direction of the seatback 11.

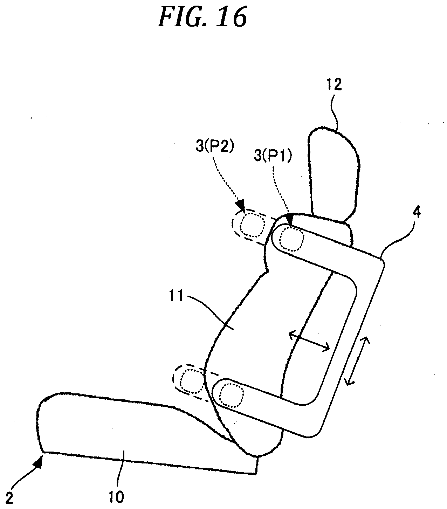

Moreover, although in the example illustrated in Fig. 1, there are plural of the movable sections 4 provided, one for each of the airbag modules 3, in the example illustrated in Fig. 16, a movable section 4 is configured from a single member, and a simplified configuration is achieved for the movable section 4, and for the drive unit 30 that drives the movable section 4 (see Fig. 4 etc.). A movable section 4 may be provided for every pair of the airbag modules 3.

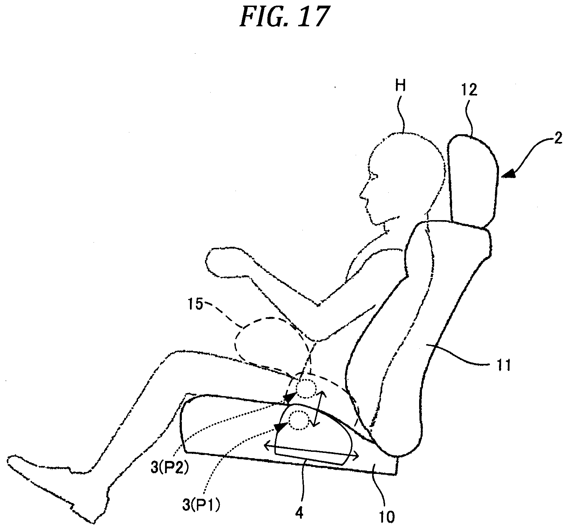

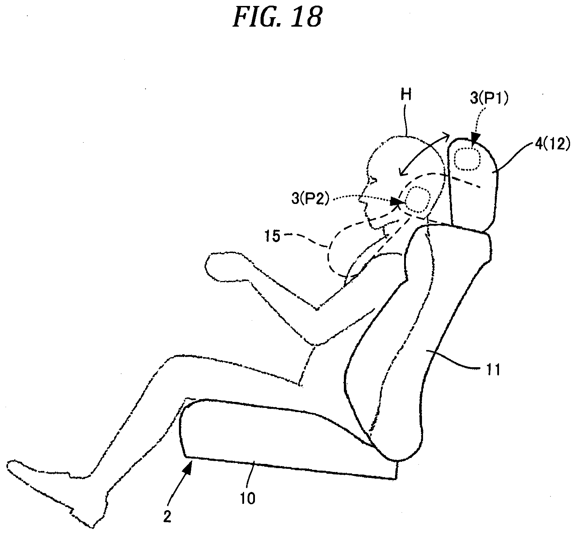

In the example illustrated in Fig. 1, the airbag modules 3, and the movable sections 4 that support the airbag modules 3, are both provided at side portions of the seatback 11. However, for example, the airbag modules 3 that deploy the airbags 15 to restrain the waist of the occupant H, and the movable sections 4 that support these airbag modules 3, may be provided at side portions of the seat cushion 10, as illustrated in Fig. 17. In such cases, the airbag modules 3 are moved between the first positions P1 and the second positions P2 by translation of the movable sections 4 in the up-down direction of the seatback 11, and the second positions P2 of the airbag modules 3 are adjusted by translation of the movable sections 4 in the up-down direction and the front-rear direction of the seatback 11. The airbag modules 3 for restraining the two shoulders of the occupant H may also be provided at side portions of the headrest 12, as illustrated in Fig. 18.

As explained above, the vehicle seat device described in the present specification includes a seat body including a seat cushion and a seatback, at least a pair of airbag modules provided as a left-right pair at left and right side portions of the seat body, and a moveable section that supports the airbag module and is movable with respect to the seat body. Movement of the moveable section moves the airbag modules between first positions along the side portions of the seat body, and second positions in front of the front face of the seatback. Airbags deployed from the airbag modules in the second position then sandwich an occupant seated in the seat body between the airbags and the seatback.

In the vehicle seat device described in the present specification, the moveable section may be capable of moving with respect to the seat body so as to make the second position adjustable in at least one of distance of the second position from the seat cushion, or distance of the second position from the seatback.

The vehicle seat device described in the present specification may further include a drive section that moves the moveable section, and a controller that sets the second position based on physique data according to the physique of an occupant seated in the seat body, and controls the drive section such that the airbag modules are disposed in the set second position.

The vehicle seat device described in the present specification may further include a drive section that moves the moveable section, and a controller that detects an occupant sitting in the seat body based on sitting data according to the seated state of the occupant in the seat body, and controls the drive section so as to dispose the airbag module in the second position when an occupant sitting in the seat body has been detected.

The vehicle seat device described in the present specification may be a vehicle seat device further including a drive section that moves the moveable section, and a controller that controls the drive section so as to dispose the airbag module in the second position on vehicle collision prediction by a collision prediction system.

## Claims

1. A vehicle seat device (1) comprising:
a seat body (2) including a seat cushion (10) and a seatback (11);
at least a pair of airbag modules (3) provided as a left-right pair at left and right side portions of the seat body (2); and at least two moveable sections (4) each supporting one of the airbag modules (3) and wherein each movable section is movable with respect to the seat body (2), **characterized in that**
the airbag modules (3) are moved, by movement of the moveable sections (4), between first positions (P1) along side portions of the seat body (2), and second positions (P2) in front of a front face of the seatback (11), and
airbags (15) deployed from the airbag modules (3) in the second positions (P2) sandwich an occupant (H) seated in the seat body (2) between the airbags (15) and the seatback (11).

2. The vehicle seat device (1) of claim 1, wherein
the moveable sections (4) are capable of moving with respect to the seat body (2) so as to make the second position (P2) adjustable in at least one of distance of the second position (P2) from the seat cushion (10), or distance of the second position (P2) from the seatback (11).

3. The vehicle seat device (1) according to one of the preceding claims, further comprising:
a drive section that moves the moveable sections (4); and
a controller that sets the second position (P2) based on physique data according to the physique of an occupant (H) seated in the seat body (2), and controls the drive section such that the airbag modules (3) are disposed in the set second position (P2).

4. The vehicle seat device (1) according to one of the preceding claims, further comprising:
a drive section that moves the moveable sections (4); and
a controller that detects an occupant (H) sitting in the seat body (2) based on sitting data according to the seated state of the occupant (H) in the seat body (2), and controls the drive section so as to dispose the airbag module (3) in the second position (P2) when an occupant sitting in the seat body (2) has been detected.

5. The vehicle seat device (1) according to one of the preceding claims, further comprising:
a drive section that moves the moveable sections (4); and
a controller that controls the drive section so as to dispose the airbag module (3) in the second position (P2) when a vehicle collision has been predicted by a collision prediction system.

## Patentansprüche

1. Fahrzeugsitzvorrichtung (1), aufweisend:
einen Sitzkorpus (2) mit einem Sitzflächenteil (10) und einer Rückenlehne (11);
mindestens zwei Airbagmodule (3), die als Links/Rechts-Paar an einem linken und rechten Seitenabschnitt des Sitzkorpus (2) vorgesehen sind; und
mindestens zwei bewegbare Abschnitte (4), die jeweils eines der Airbagmodule (3) haltern, wobei jeder bewegbare Abschnitt in Bezug auf den Sitzkorpus (2) bewegbar ist,
**dadurch gekennzeichnet, dass**
die Airbagmodule (3) durch eine Bewegung der bewegbaren Abschnitte (4) zwischen ersten Positionen (P1) entlang Seitenabschnitten des Sitzkorpus (2) und zweiten Positionen (P2) vor einer Vorderfläche der Rückenlehne (11) bewegt werden, und
Airbags (15), die sich in den zweiten Positionen (P2) aus den Airbagmodulen (3) heraus entfalten, einen im Sitzkorpus (2) zwischen den Airbags (15) sitzenden Insassen (H) zwischen sich und der Rückenlehne (11) einschließen.

2. Fahrzeugsitzvorrichtung (1) nach Anspruch 1, wobei die bewegbaren Abschnitte (4) in der Lage sind, sich in Bezug auf den Sitzkorpus (2) so zu bewegen, dass die zweite Position (P2) hinsichtlich des Abstandes der zweiten Position (P2) vom Sitzflächenteil (10) und/oder des Abstandes der zweiten Position (P2) von der Rückenlehne (11) einstellbar wird.

3. Fahrzeugsitzvorrichtung (1) nach einem der vorhergehenden Ansprüche, darüber hinaus aufweisend:
einen Antriebsabschnitt, der die bewegbaren Abschnitte (4) bewegt; und
eine Steuerung, welche die zweite Position (P2) beruhend auf körperbezogenen Daten entsprechend dem Körperbau eines im Sitzkorpus (2) sitzenden Insassen (H) einstellt und den Antriebsabschnitt so ansteuert, dass die Airbagmodule (3) in der eingestellten zweiten Position (P2) angeordnet werden.

4. Fahrzeugsitzvorrichtung (1) nach einem der vorhergehenden Ansprüche, darüber hinaus aufweisend:
einen Antriebsabschnitt, der die bewegbaren Abschnitte (4) bewegt; und
eine Steuerung, die einen im Sitzkorpus (2) sitzenden Insassen (H) beruhend auf Sitzdaten gemäß dem Sitzzustand des Insassen (H) im Sitzkorpus (2) erfasst und den Antriebsabschnitt so ansteuert, dass das Airbagmodul (3) in der zweiten Position (P2) angeordnet wird, wenn ein im Sitzkorpus (2) sitzender Insasse erfasst wurde.

5. Fahrzeugsitzvorrichtung (1) nach einem der vorhergehenden Ansprüche, darüber hinaus aufweisend:
einen Antriebsabschnitt, der die bewegbaren Abschnitte (4) bewegt; und
eine Steuerung, die den Antriebsabschnitt so ansteuert, dass das Airbagmodul (3) in der zweiten Position (P2) angeordnet wird, wenn von einem Kollisionsvorhersagesystem eine Fahrzeugkollision vorhergesagt wurde.

## Revendications

1. Dispositif de siège de véhicule (1) comprenant :
un corps de siège (2) incluant un coussin de siège (10) et un dossier (11) ;
au moins une paire de modules de sac gonflable (3) prévus comme paire gauche-droite au niveau de parties latérales gauche et droite du corps de siège (2) ; et
au moins deux sections mobiles (4) supportant chacune un des modules de sac gonflable (3) et sachant que chaque section mobile est déplaçable par rapport au corps de siège (2), **caractérisé en ce que**
les modules de sac gonflable (3) sont déplacés, moyennant le mouvement des sections mobiles (4), entre des premières positions (P1) le long de parties latérales du corps de siège (2) et des deuxièmes positions (P2) en face d'une face avant du dossier (11), et
des sacs gonflables (15) déployés à partir des modules de sac gonflable (3) dans les deuxièmes positions (P2) prennent en sandwich un occupant (H) assis dans le corps de siège (2) entre les sacs gonflables (15) et le dossier (11).

2. Le dispositif de siège de véhicule (1) de la revendication 1, sachant que
les sections mobiles (4) sont capables de se déplacer par rapport au corps de siège (2) de manière à rendre la deuxième position (P2) ajustable dans au moins l'une d'une distance de la deuxième position (P2) par rapport au coussin de siège (10) ou d'une distance de la deuxième position (P2) par rapport au dossier (11).

3. Le dispositif de siège de véhicule (1) selon l'une des revendications précédentes, comprenant en outre :
une section d'entraînement qui déplace les sections mobiles (4) ; et
une unité de commande qui règle la deuxième position (P2) sur la base de données physiques selon le physique de l'occupant (H) assis dans le corps de siège (2) et commande la section d'entraînement de telle sorte que les modules de sac gonflable (3) soient disposés dans la deuxième position (P2) réglée.

4. Le dispositif de siège de véhicule (1) selon l'une des revendications précédentes, comprenant en outre :
une section d'entraînement qui déplace les sections mobiles (4) ; et
une unité de commande qui détecte un occupant (H) assis dans le corps de siège (2) sur la base de données de position assise selon l'état assis de l'occupant (H) dans le corps de siège (2) et commande la section d'entraînement de manière à disposer le module de sac gonflable (3) dans la deuxième position (P2) lorsqu'un occupant assis dans le corps de siège (2) a été détecté.

5. Le dispositif de siège de véhicule (1) selon l'une des revendications précédentes, comprenant en outre :
une section d'entraînement qui déplace les sections mobiles (4) ; et
une unité de commande qui commande la section d'entraînement de manière à disposer le module de sac gonflable (3) dans la deuxième position (P2) lorsqu'une collision de véhicule a été prédite par un système de prédiction de collision.
